# EUROPEAN PATENT APPLICATION

(11) **EP 2 372 619 A1**
(43) Date of publication of application: **05.10.2011**
(21) Application number: 10192828.1
(22) Date of filing: 29.11.2010
(51) Int. Cl.: G06Q 10/00

(54) **Electronic shelf label system, method of synchronizing electronic shelf label tag with product, and method of updating product information of the same**

(30) Priority: 30.03.2010 KR 20100028622
(71) Applicant: Samsung Electro-Mechanics Co., Ltd, Suwon, Gyunggi-Do (KR)
(72) Inventor: Lee, Yun Jong, Seoul (KR); Lim, Chang Soo, Seoul (KR); Seo, Jeong Su, Seoul (KR); Lee, Song On, Gyunggi-do (KR); Namgung, Yong Gil, Gyunggi-do (KR); Kim, Hak Sun, Daejeon (KR); Kim, Dong Hyun, Gyunggi-do (KR)
(74) Representative: Grünecker, Kinkeldey, Stockmair & Schwanhäusser Anwaltssozietät

(57) **Abstract**

The electronic shelf label system includes a management server unit storing product information regarding a product, a gateway unit including a plurality of gateways receiving a message containing the product information from the management server unit, and a plurality of electronic shelf label tag units communicating with the gateways, respectively, the plurality of electronic shelf label tag units each including a plurality of electronic shelf label tags receiving the product information from the gateway and displaying the received product information. The management server unit includes a database storing tag information regarding the electronic shelf label tags and product information displayed on the electronic shelf label tags such that the tag information and the product information are linked together.

## Description

### CROSS-REFERENCE TO RELATED APPLICATIONS

This application claims the priority of Korean Patent Application No. 10-2010-0028622 filed on March 30, 2010, in the Korean Intellectual Property Office, the disclosure of which is incorporated herein by reference.

### BACKGROUND OF THE INVENTION

### Field of the Invention

The present invention relates to an electronic shelf label system and an operating method thereof, and more particularly, to an electronic shelf label system, allowing for an efficient management and product information display on a plurality of electronic shelf label tags, a method of synchronizing an electronic shelf label tag with a product for the electric shelf label system, and a method of updating product information for the electronic shelf label system.

### Description of the Related Art

In general, retailers (distribution stores) use paper labels in order to display information about products displayed on shelves, such as prices, discount rates, unit costs, origins or the like. Using such paper labels for the price display has limitations in that, when there are changes in product information or locations on shelves, new paper labels need to be used after old ones are discarded. This continuously raises costs for maintenance, and, in environmental terms, causes wastage of a raw material, paper, which adversely affects the protection of the environment.

In order to substitute paper labels, electronic price displays (or Electronic Shelf Labels: ESL) are being actively researched and developed.

Electronic shelf labels are normally attached to the front edge of retail shelving and display a variety of pricing information using display devices such as Liquid Crystal Displays (LCD). Whenever the information about a product or the location of a product is changed, an electronic shelf label receives new product information and updates the product information being displayed. Thus, the electronic shelf label can be repeatedly used.

Consumers who want to purchase products in retail outlets are increasingly demanding a wider range of information about products displayed on shelves. To meet this demand and increase sales, electronic shelf labels need to display a variety of information with relation to these displayed products, concerning, for example, origins, additional functions, energy efficiency, barcodes or the like, in addition to simple price information.

Therefore, an electronic shelf label system, ensuring more efficient operation allowing more detailed product information to be displayed, is currently in demand.

### SUMMARY OF THE INVENTION

An aspect of the present invention provides an electronic shelf label system, allowing for efficient product management and a product information display on a plurality of electronic shelf label tags, a method of synchronizing an electronic shelf label tag with a product for the electric shelf label system, and a method of updating product information for the electronic shelf label system.

According to an aspect of the present invention, there is provided the electronic shelf label system including: a management server unit storing product information regarding a product; a gateway unit including a plurality of gateways receiving a message containing the product information from the management server unit; and a plurality of electronic shelf label tag units communicating with the gateways, respectively, the plurality of electronic shelf label tag units each including a plurality of electronic shelf label tags receiving the product information from the gateway and displaying the received product information, wherein the management server unit includes a database storing tag information regarding the electronic shelf label tags and product information displayed on the electronic shelf label tags such that the tag information and the product information are linked together.

The electronic shelf label system may further include an interface unit forming a communication channel between the management server unit and the gateway unit to thereby allow the gateway unit to receive the message from the management server unit. The interface unit and the gateway unit may communicate with each other by using a wired Local area Network (LAN) or a wireless LAN.

The electronic shelf label system may further include a Personal Digital Assistant (PDA) sending the management server unit a manager's input intended to manage product information displayed on the electronic shelf label tags. The electronic shelf label system may further include an interface unit forming a communication channel between the PDA and the management server unit to thereby send the manager's input to the management server unit. The interface unit and the PDA may communicate with each other by using a wired Local Area Network (LAN) or a wireless LAN.

The gateways and the electronic shelf label tags may wirelessly communicate with each other by using Zigbee.

The gateways and the electronic shelf label tags may communicate with each other by using two communication channels including a communication channel for transmitting a wakeup signal indicating the presence/absence of data to be received, and a communication channel for transmitting data containing the product information.

According to another aspect of the present invention, there is provided a method of synchronizing an electronic shelf label tag with a product in an electronic shelf label system, the method including: acquiring product identification information for identifying a product to be synchronized, and tag identification information for identifying an electronic shelf label tag to be synchornized; sending a management server unit a product synchronization request message containing the product identification information and the tag identification information; acquiring, by the management server unit, product information concerning a product corresponding to the product identification information contained in the product synchronization request message, and writing and transmitting a tag synchronization request message containing the acquired product information and the tag identification information contained in the product synchronization request message; receiving the tag synchronization request message in a gateway and transmitting, by the gateway, the product information contained in the tag synchronization request message to an electronic shelf label tag having the tag identification information contained in the tag synchronization request message; and displaying, by the electronic shelf label tag, the product information contained in the received tag synchronization request message.

The product identification information for identifying a product to be synchronized may be acquired by scanning a barcode provided on the product to be synchronized.

The tag identification information for identifying an electronic shelf label tag to be synchronized may be configured as a Media Access Control (MAC) address of the electronic shelf label tag to be synchronized.

According to another aspect of the present invention, there is provided a method of updating product information in an electronic shelf label system, the method including: checking whether or not an update request for product information concerning a product is made; writing and transmitting, by a management server unit, a product information change request message containing new product information concerning a product for which the update request has been made, and tag identification information concerning an electronic shelf label tag displaying the product information regarding the product; receiving the product information change request message in a gateway, and transmitting, by the gateway, the new product information contained in the product information change request message to the electronic shelf label tag having the tag identification information contained in the product information change request message; and displaying, by the electronic shelf label tag, the new product information contained in the product information change request message received therein.

The update request for product information may be made periodically.

The tag identification information concerning an electronic shelf label tag displaying the product information regarding the product for which the update request has been made may be a Media Access Control (MAC) address of the electronic shelf label tag displaying the product information regarding the product.

### BRIEF DESCRIPTION OF THE DRAWINGS

The above and other aspects, features and other advantages of the present invention will be more clearly understood from the following detailed description taken in conjunction with the accompanying drawings, in which:

FIG. 1 is a block diagram illustrating an electronic shelf label system according to an exemplary embodiment of the present invention;

FIG. 2 is a view illustrating the actual application of an electronic shelf label system to a store according to an exemplary embodiment of the present invention;

FIG. 3 is a flowchart illustrating the process of synchronizing product information, applied to an electronic shelf label system according to an exemplary embodiment of the present invention; and

FIG. 4 is a flowchart illustrating the process of updating product information, applied to an electronic shelf label system according to an exemplary embodiment of the present invention.

### DETAILED DESCRIPTION OF THE PREFERRED EMBODIMENT

Exemplary embodiments of the present invention will now be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art. In the drawings, the shapes and dimensions of elements may be exaggerated for clarity.

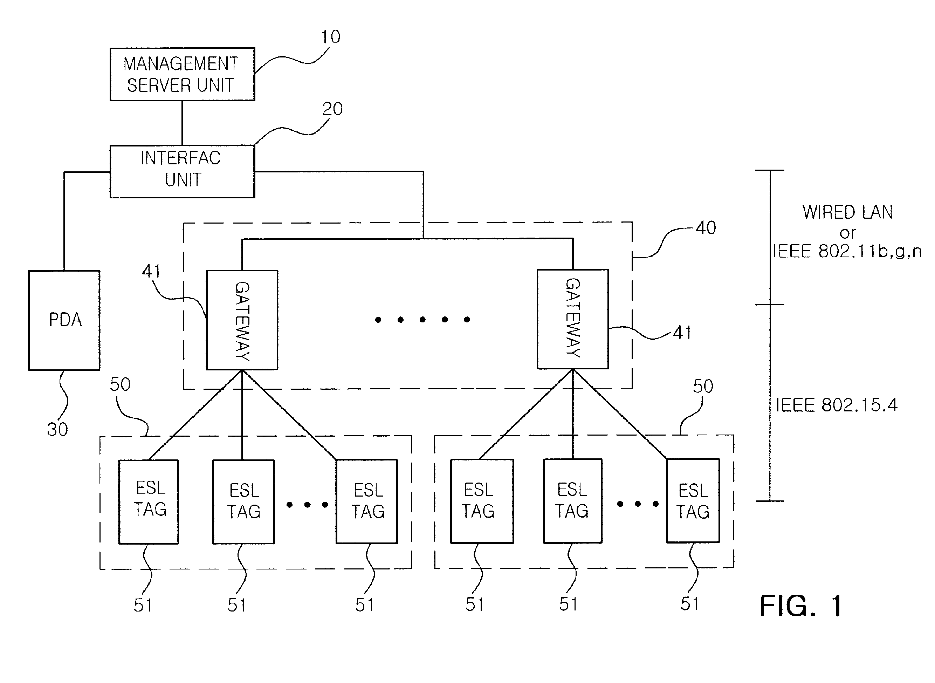

FIG. 1 is a block diagram illustrating an electronic shelf label system according to an exemplary embodiment of the present invention.

As shown in FIG. 1, an electronic shelf label (ESL) system, according to an exemplary embodiment, includes a management server unit 10, an interface unit 20, a gateway unit 40 and an electronic shelf label tag unit 50.

The management server unit 10 may be implemented as a database (DB) server that stores and manages product information regarding products displayed in a distribution store. The management server unit 10 may store a variety of information required in operating the distribution store, as well as product information. Furthermore, the management server unit 10 may write and manage command messages that are used to carry out various functions such as the synchronization, updating and alteration of product information displayed on electronic shelf label tags 51. To this end, the management server unit 10 may be provided with a database for the electronic shelf label tags 51 and product information displayed on the electronic shelf label tags 51. That is, the management server unit 10 may be provided with a database that stores identification information relating to the electronic shelf label tags 51 in connection with product information displayed on a corresponding one of the electronic shelf label tags 51.

The interface unit 20 may form a communication channel between the management server unit 10 and the gateway unit 40 such that a command message, created by the management server unit 10 (e.g., a product-information change message, a management-information acquisition message or the like) can be transferred to the gateway unit 40 in real-time. For example, the interface unit 20 may configure a message, created by the management server unit 10, into a packet suitable for a preset communication scheme used for the communication with the gateway unit 40, and transfer the configured packet. Furthermore, the interface unit 20 may receive a reception acknowledgement message, sent from the gateway unit 40, through the preset communication scheme, convert the received message into a message receivable by the management server unit 10, and transfer the converted message thereto, thereby enabling the subsequent process. As for the communication scheme between the interface unit 20 and the gateway unit 40, a wired or a wireless LAN method (i.e., IEEE 802.11b,g,n) may be used.

The gateway unit 40 may include a plurality of gateways 41 communicating with the management server unit 10. Each gateway 41 of the gateway unit 40 analyses data received from the management server unit 10 to thereby confirm the presence or absence of a message or data, which is to be sent to an electronic shelf label tag 51 communicating therewith, and then sends the confirmed message or data to the corresponding electronic shelf label tag 51. The gateway 41 may configure a message, which is to be sent to the electronic shelf label tag 51, into a packet according to a preset communication scheme and send the configured packet to the electronic shelf label tag 51. Furthermore, the gateway 41 may transfer a reception acknowledgement message, received from the electronic shelf label tag 51, to a server. As for the preset communication scheme between the gateway 41 and the electronic shelf label tag 51, a Zigbee wireless communication scheme (i.e., IEEE 802.15.4) may be utilized such that communication with multiple electronic shelf label tags 51 can occur via a single gateway 41.

The electronic shelf label tag unit 50 may include a plurality of electronic shelf label tags 51 displaying data, concerning product information received from the gateway 41, and sending an operation result upon the data reception to the gateway 41. A plurality of electronic shelf label tags 51 contained in a single electronic shelf label tag unit 50 may communicate with a single gateway 41. As described above, a Zigbee wireless communication scheme may be used in order to enable communication between a single gateway 41 and a plurality of electronic shelf label tags 51. For the more efficient implementation, the communication between the gateway and the electronic shelf label tags may be carried out via two separate communication channels, a wakeup channel and a data channel. Since the electronic shelf label tag unit 50 is placed where constant power supply is difficult, power is supplied to the electronic shelf label tag unit 50 by using a battery. Thus, in order that a single battery change ensures a prolonged period of battery use, lasting longer than several years, it is important to minimize power consumption. To this end, the electronic shelf label tag unit 50 operates mostly by the wakeup communication scheme. That is, the electronic shelf label tag 51 wakes up according to predetermined time intervals to thereby confirm whether data to be received is present. When it is confirmed that there is no data to be received, power to the electronic shelf label tag 51 is turned off until the next wakeup period in order to minimize power consumption. It is only when there is data to be received that power is supplied to the electronic shelf label tag 51 for communication and thus the electronic shelf label tag 51 operates for data reception. According to this exemplary embodiment, for a more efficient application of this wakeup communication scheme, a communication channel may be operated, divided into a communication channel used for wakeup and a communication channel used for data transmission. Namely, a channel for transmitting data used in an actual display may be operated separately from a communication channel for transmitting a wakeup signal indicating the presence/absence of data which is to be received.

According to another exemplary embodiment of the present invention, a user may further include a personal digital assistant (PDA) 30 allowing a user to directly communicate with the management server unit 10. The PDA 30 may transfer user input for synchronizing a product being displayed with an electronic shelf label tag displaying product information of the product, or for inactivating the synchronization between a currently displayed product and an electronic shelf label tag.

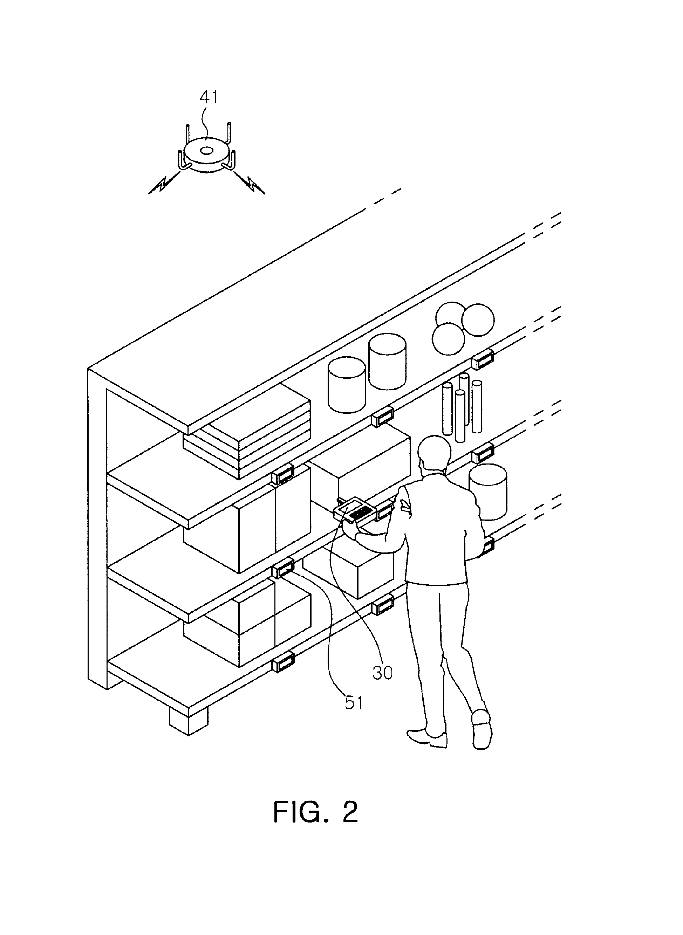

FIG. 2 is a view illustrating the actual application of an electronic shelf label system to a store according to an exemplary embodiment of the present invention.

As shown in FIG. 2, electronic shelf label tags 51, displaying product information associated with products displayed on shelving, may be attached to the shelving. The electronic shelf label tag 51 may change price information or be activated or inactivated while communicating with the gateway 41 disposed at a predetermined location in a store. A store manager may send the management server unit a command concerning the synchronization between a product and the electronic shelf label tag 51, the correction of information or the like.

Hereinafter, a method of operating an electronic shelf label system configured in the above manner according to embodiments of the present invention will be described in more detail.

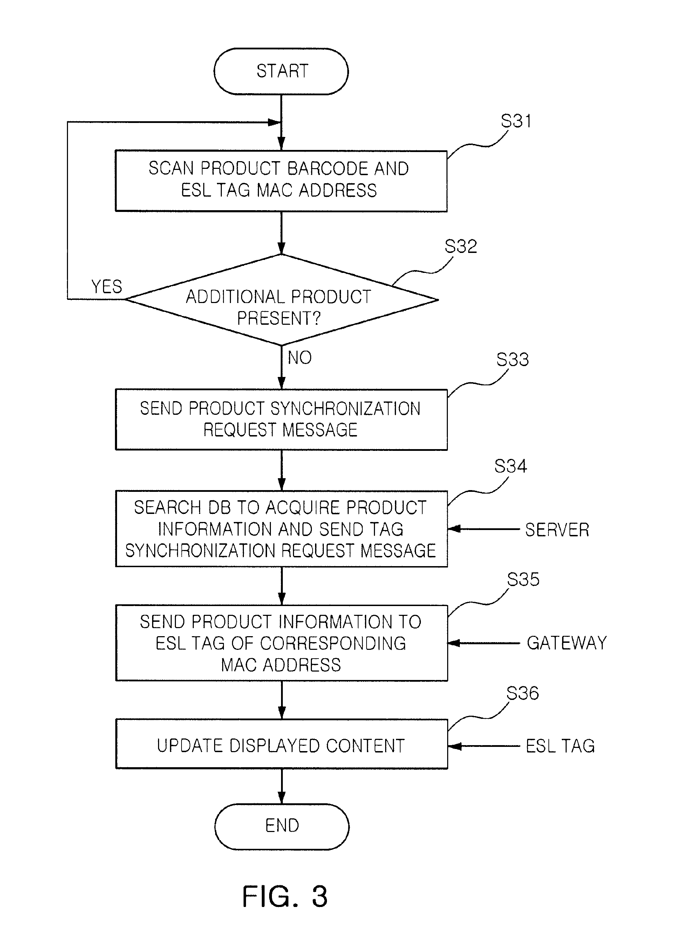

First, there will be described the process of synchronizing a product on shelving with an electronic shelf label tag for displaying information regarding the product according to the method of operating the electronic shelf label system according to an exemplary embodiment of the present invention. FIG. 3 is a flowchart illustrating a product-information synchronizing process applied to the electronic shelf label system according to an exemplary embodiment of the present invention.

Referring to FIGS. 1 through 3, in operation S31, a store manager may acquire product identification information, and tag identification information for identifying an electronic shelf label tag displaying data regarding a corresponding product, by using a PDA 30. The product identification information may be acquired by scanning a barcode on a product, and the tag identification information may be a Media Access Control (MAC) address of a corresponding electronic shelf label tag. The acquisition of product identification information and associated tag identification information may be repeated according to the number of products and tags to be synchronized.

In operation S32, it is confirmed whether there is an additional product and tag to be synchronized. If objects for synchronization no longer exist, a product synchronization request message, containing the product identification information and the associated tag identification information, is sent to the management server unit 10 in operation S33. When this product synchronization request message is sent, a communication channel between the PDA 30 of the store manager and the interface unit 20 is configured as a wireless LAN (IEEE 802.11b,g,n) to thereby enable wireless communications therebetween. The interface unit 20 may send the product synchronization request message, received through the communication with the PDA 30, to the management server unit 10.

In operation S34, the management server unit 10 checks what kind of product is to be synchronized, by using the product identification information contained in the product synchronization request message, and searches a database to acquire product information concerning the corresponding product. Subseqneitly in operation S34, the management server unit 10 writes and transmits a tag synchronization request message containing the searched product information and the tag identification information contained in the product synchronization request message. The tag synchronization request message, transmitted from the management server unit 10, may be transmitted to the interface unit 20. The interface unit 20 may configure a communication channel allowing for the data transmission/reception with the interface unit 20 according to a preset communication scheme (e.g., wired LAN or IEEE 802.11b,g,n), and thereafter transmit the tag synchronization request message to the gateway unit 40 through the configured communication channel.

The gateway 41 of the gateway unit 40 receives the tag synchronization request message, and confirms whether the tag identification information contained in the tag synchronization request message is associated with an electronic shelf label tag that communicates with the gateway 41 via a network thereof. When it is confirmed that the tag identification information is associated with an electronic shelf label tag included in its network, the gateway 41 transmits product information, contained in the tag synchronization request message, to the electronic shelf label tag having the corresponding tag identification information (i.e., a MAC address) in operation S35. As described above, according to an exemplary embodiment of the present invention, communication between the gateway 41 and the electronic shelf label tag 51 can be carried out via two channels, a wakeup channel and a data channel. Therefore, the gateway 41 may activate the electronic shelf label tag 51 by notifying the electronic shelf label tag 51 of the presence of reception data via the wakeup channel, and thereafter transmit product information contained in the tag synchronization request message via the data channel.

Finally, the electronic shelf label tag 51 is updated to thereby display received product information, thereby completing the synchronization process between the product and the electronic shelf label tag 51. The electronic shelf label tag 51 may send a confirmation message that confirms that the received product information has been displayed successfully. This confirmation message may be transmitted to the management server unit 10 by way of the gateway 41 and the interface unit 20. When the management server unit 10 does not receive this confirmation message, the above operations S34 to S36 are repeated to thereby retry the synchronization with the electronic shelf label tag.

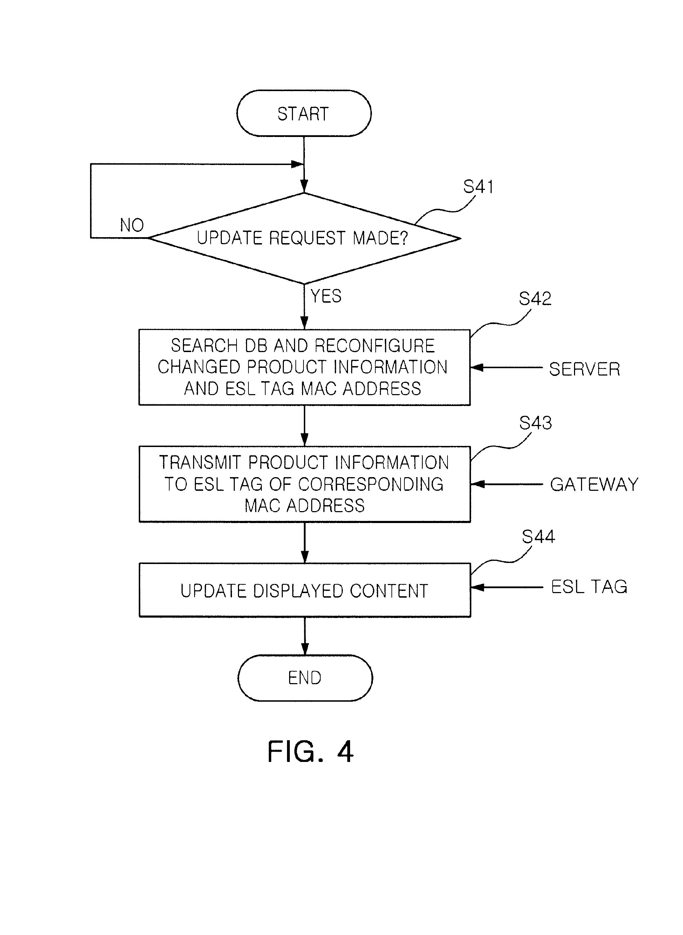

Hereinafter, there will be described the process of updating product information regarding products on shelving in an electronic shelf label tag according to the method of operating the electronic shelf label system. FIG. 4 is a flowchart illustrating a product-information updating process applied to the electronic shelf label system according to an exemplary embodiment of the present invention.

Referring to FIGS. 1, 2 and 4, the product-information updating process may begin with operation S41 of checking whether or not an update request for updating product information has been made. A manager may make this update request directly by instructing the management server unit 10 to update product information. Alternatively, the update request may be made periodically according to intervals set by a user, or may be automatically made at the time when there is a change in a product-information database.

When an update request for an electronic shelf label tag 51 is made, the management server unit 10 may search a database and thus write a product information change request message that contains new product information concerning a product, associated with the corresponding update request, and tag identification information (e. g. , a MAC address) concerning an electronic shelf label tag displaying product information concerning the product associated with the update request. In operation S42, the interface unit 20 transmits the product information change request message to the gateway unit 30 via a communication channel, formed between the interface unit 20 and the gateway unit 30, according to a preset communication scheme.

The gateway 41 of the gateway unit 40 receives a product information change request message, and confirms whether the tag identification information contained in the product information change request message is associated with an electronic shelf label tag communication via a network of the waterway 41. When it is confirmed that the electronic shelf label tag 41 is included in the network of the gateway 41, the gateway 41 transmits product information contained in the product information change request message to the electronic shelf label tag having the tag identification information (a MAC address) in operation S43. As described above according to an exemplary embodiment of the present invention, the communication between the gateway and the electronic shelf label tag may be carried out via two channels, a wakeup channel and a data channel. Therefore, the gateway 41 may activate the electronic shelf label tag by notifying the electronic shelf label tag of the presence of reception data via the wakeup channel, and thereafter transmit product information contained in the product information change request message via the data channel.

Finally, the electronic shelf label tag 51 is updated to thereby display received new product information, thereby completing the update process of the product information. The electronic shelf label tag 51 may send a confirmation message that confirms that the received product information has been displayed successfully. This confirmation message may be transmitted to the management server unit 10 by way of the gateway 41 and the interface unit 20. When the management server unit 10 does not receive this confirmation message, the above operations S42 to S446 are repeated to thereby retry the updating process.

As described above, according to the electronic shelf label system, the method of synchronizing an electronic shelf label tag with a product for the electric shelf label system, and the method of updating product information for the electronic shelf label system according to exemplary embodiments of the present invention, information concerning a variety of products can be displayed efficiently on electronic shelf label tags. That is, the time and manpower required for the synchronization between a product and an electronic shelf label tag or for the update of product information can be saved. Also, by managing electronic shelf label tags periodically, errors in displayed product information can be minimized. Furthermore, additional positive effects can be expected with regard to automating physical distribution in a store or making the store look like a high-tech store appealing to consumers.

While the present invention has been shown and described in connection with the exemplary embodiments, it will be apparent to those skilled in the art that modifications and variations can be made without departing from the spirit and scope of the invention as defined by the appended claims.

## Claims

1. An electronic shelf label system comprising:
a management server unit storing product information regarding a product;
a gateway unit including a plurality of gateways receiving a message containing the product information from the management server unit; and
a plurality of electronic shelf label tag units communicating with the gateways, respectively, the plurality of electronic shelf label tag units each comprising a plurality of electronic shelf label tags receiving the product information from the gateway and displaying the received product information,
wherein the management server unit comprises a database storing tag information regarding the electronic shelf label tags and product information displayed on the electronic shelf label tags such that the tag information and the product information are linked together.

2. The electronic shelf label system of claim 1, further comprising an interface unit forming a communication channel between the management server unit and the gateway unit to thereby allow the gateway unit to receive the message from the management server unit.

3. The electronic shelf label system of claim 2, wherein the interface unit and the gateway unit communicate with each other by using a wired Local area Network (LAN) or a wireless LAN.

4. The electronic shelf label system of claim 1, further comprising a Personal Digital Assistant (PDA) sending the management server unit a manager' s input intended to manage product information displayed on the electronic shelf label tags.

5. The electronic shelf label system of claim 4, further comprising an interface unit forming a communication channel between the PDA and the management server unit to thereby send the manager' s input to the management server unit.

6. The electronic shelf label system of claim 5, wherein the interface unit and the PDA communicate with each other by using a wired Local Area Network (LAN) or a wireless LAN.

7. The electronic shelf label system of claim 1, wherein the gateways and the electronic shelf label tags wirelessly communicate with each other by using Zigbee.

8. The electronic shelf label system of claim 1, wherein the gateways and the electronic shelf label tags communicate with each other by using two communication channels comprising a communication channel for transmitting a wakeup signal indicating the presence/absence of data to be received, and a communication channel for transmitting data containing the product information.

9. A method of synchronizing an electronic shelf label tag with a product in an electronic shelf label system, the method comprising:
acquiring product identification information for identifying a product to be synchronized, and tag identification information for identifying an electronic shelf label tag;
sending a management server unit a product synchronization request message containing the product identification information and the tag identification information;
acquiring, by the management server unit, product information concerning a product corresponding to the product identification information contained in the product synchronization request message, and writing and transmitting a tag synchronization request message containing the acquired product information and the tag identification information contained in the product synchronization request message;
receiving the tag synchronization request message in a gateway and transmitting, by the gateway, the product information contained in the tag synchronization request message to an electronic shelf label tag having the tag identification information contained in the tag synchronization request message; and
displaying, by the electronic shelf label tag, the product information contained in the received tag synchronization request message.

10. The method of claim 9, wherein the product identification information for identifying a product to be synchronized is acquired by scanning a barcode provided on the product to be synchronized.

11. The method of claim 9, wherein the tag identification information for identifying an electronic shelf label tag to be synchronized is configured as a Media Access Control (MAC) address of the electronic shelf label tag to be synchronized.

12. A method of updating product information in an electronic shelf label system, the method comprising:
checking whether or not an update request for product information concerning a product is made;
writing and transmitting, by a management server unit, a product information change request message containing new product information concerning a product for which the update request has been made, and tag identification information concerning an electronic shelf label tag displaying the product information regarding the product;
receiving the product information change request message in a gateway, and transmitting, by the gateway, the new product information contained in the product information change request message to the electronic shelf label tag having the tag identification information contained in the product information change request message; and
displaying, by the electronic shelf label tag, the new product information contained in the product information change request message received therein.

13. The method of claim 12, wherein the update request for product information is made periodically.

14. The method of claim 12, wherein the tag identification information concerning an electronic shelf label tag displaying the product information regarding the product for which the update request has been made is a Media Access Control (MAC) address of the electronic shelf label tag displaying the product information regarding the product.
